# EUROPEAN PATENT SPECIFICATION

(11) **EP 3 680 503 B1**
(45) Date of publication and mention of the grant of the patent: **05.01.2022**
(21) Application number: 19860327.6
(22) Date of filing: 03.06.2019
(51) Int. Cl.: F03C 1/06, F16D 65/28, F16D 55/36, F16D 59/02

(54) **BRAKE SYSTEM AND HYDRAULIC MOTOR PROVIDED WITH SAME**
BREMSSYSTEM UND HYDRAULIKMOTOR DAMIT
SYSTÈME DE FREINAGE ET MOTEUR HYDRAULIQUE DOTÉ DE CELUI-CI

(30) Priority: 10.09.2018 JP 2018168637
(43) Date of publication of application: 15.07.2020
(73) Proprietor: KYB Corporation, Tokyo 105-6111 (JP)
(72) Inventor: KATSURA, Kosuke, Tokyo 105-6111 (JP); SUZUKI, Kenji, Tokyo 105-6111 (JP)
(74) Representative: TBK
(86) International application number: PCT/JP2019/022000
(87) International publication number: WO 2020/054144

(56) References cited:
- WO-A1-2009/096100
- JP-A- 2002 303 247
- JP-A- 2002 349 508
- JP-A- 2013 136 376

## Description

### TECHNICAL FIELD

The present invention relates to a brake system and a fluid pressure motor including the same.

### BACKGROUND ART

JP2013136376 A discloses a brake device for a hydraulic motor.

JP2002-039047A discloses a brake system of a fluid pressure motor, including a brake device configured to cancel brake force by supply of a pressurized working fluid and generate the brake force by discharge of the working fluid, and a switching valve configured to switch open and close of a supply passage through which the working fluid is supplied to the brake device.

### SUMMARY OF INVENTION

The switching valve of the brake system described in JP2002-039047A is to open and close the supply passage in accordance with pressure of supplied pilot pressure. Therefore, in addition to the supply passage, an introduction passage for introducing the pilot pressure is provided in the switching valve. Since the supply passage and the introduction passage are provided in the switching valve in such a way, two passages through which the working fluid is supplied from a pressurizing source configured to pressurize the working fluid to the switching valve are provided.

Therefore, the number of pipes and parts that connect the pipes is increased, and the man-hour of processing the switching valve, the man-hour of connecting the pipes, etc. are increased. Thus, there is a possibility that manufacturing cost of the brake system is increased.

An object of the present invention is to reduce manufacturing cost of a brake system.

According to an aspect of the present invention, a brake system used in a fluid pressure motor including a cylinder block configured to be rotated by fluid pressure, an output shaft configured to be rotated integrally with the cylinder block, and a case configured to rotatably support the output shaft, the brake system includes: a brake device configured to cancel brake force by supply of a pressurized working fluid and generate the brake force by discharge of the working fluid; a supply passage through which the working fluid pressurized in a working fluid pressurizing source is supplied to the brake device; a valve device configured to open and close the supply passage; a discharge passage through which the working fluid discharged from the brake device flows; and a restrictor configured to apply resistance to the working fluid flowing through the discharge passage, wherein the valve device has a first connection port connected to the upstream side of the supply passage, the first connection port to which the working fluid is led from the working fluid pressurizing source, a second connection port connected to the downstream side of the supply passage, the second connection port from which the working fluid is led to the brake device, and a valve element provided with a pressure receiving surface facing the first connection port, and the valve element permits communication between the first connection port and the second connection port when pressure of the working fluid led to the first connection port reaches predetermined pressure, and shuts off the communication between the first connection port and the second connection port when the pressure of the working fluid led to the first connection port becomes less than the predetermined pressure.

### BRIEF DESCRIPTION OF DRAWINGS

[Fig. 1] Fig. 1 is a sectional view showing the entire configuration of a hydraulic motor to which a brake system according to a first embodiment of the present invention is applied.
[Fig. 2] Fig. 2 is a sectional view showing the entire configuration of a hydraulic motor to which a brake system according to a second embodiment of the present invention is applied.
[Fig. 3] Fig. 3 is a sectional view showing the entire configuration of a hydraulic motor to which a brake system according to a third embodiment of the present invention is applied.
[Fig. 4] Fig. 4 is a sectional view showing the entire configuration of a hydraulic motor to which a brake system according to a fourth embodiment of the present invention is applied.

### DESCRIPTION OF EMBODIMENTS

Hereinafter, embodiments of the present invention will be described with reference to the drawings.

### <First Embodiment>

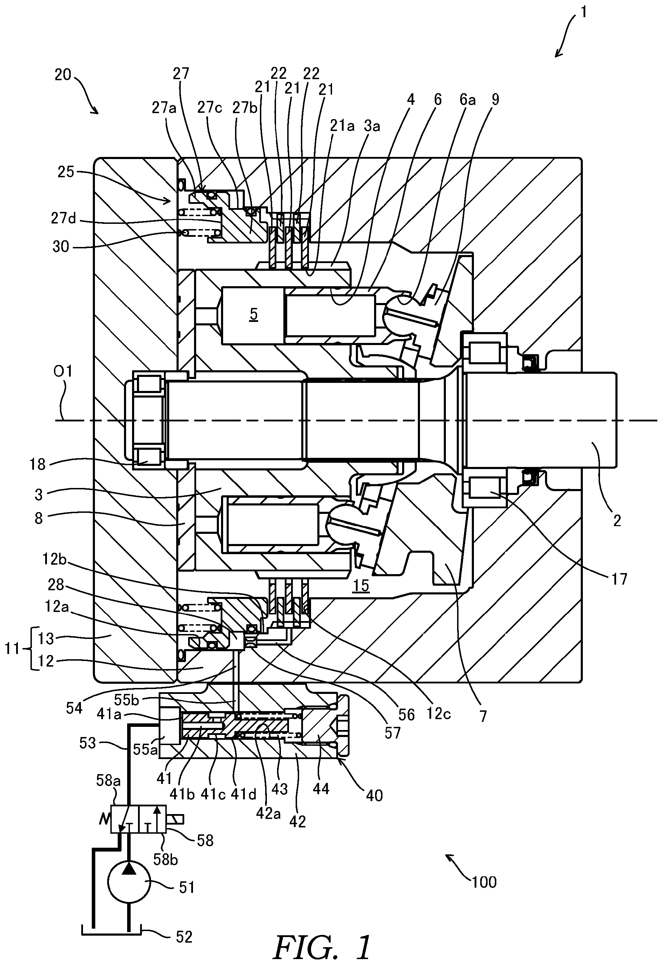

With reference to Fig. 1, a brake system 100 serving as an embodiment of the present invention will be described. Fig. 1 is a sectional view showing the entire configuration of a hydraulic motor 1 serving as a fluid pressure motor to which the brake system 100 is applied.

First, the entire configuration of the hydraulic motor 1 will be described with reference to Fig. 1. The hydraulic motor 1 is, for example, a swash plate type hydraulic motor used for a traveling device or a turning device of a construction machine, etc.

The hydraulic motor 1 includes an output shaft 2 coupled to a driven body (not shown) serving as a load, and a cylinder block 3 coupled to the output shaft 2 which is configured to be rotated integrally with the output shaft 2. The output shaft 2 is rotatably supported by a case 11 via two bearings 17, 18. The case 11 is divided into a housing case 12 configured to house the cylinder block 3, and a lid member 13 combined with the housing case 12 via a bolt (not shown) and configured to cover an opening portion of the housing case 12.

Plural cylinders 4 arranged on the concentric circle centered on the axis O1 of the output shaft 2 are provided in the cylinder block 3 in parallel to the output shaft 2. The cylinders 4 are opened on one end surface of the cylinder block 3, and a piston 6 defining a capacity chamber 5 in the cylinder 4 is reciprocatably and slidably inserted into each of the cylinders 4. A spline 3a formed along the axis O1 of the output shaft 2 is provided in an outer periphery of the cylinder block 3.

A shoe 9 is coupled to a leading end of the piston 6 via a spherical surface seat 6a. The shoe 9 is in surface contact with a swash plate 7 fixed to the housing case 12. The piston 6 reciprocates in the cylinder 4 by a stroke amount in accordance with a tilt angle of the swash plate 7 with which the shoe 9 is in sliding contact.

A valve plate 8 in sliding contact with a base end surface of the cylinder block 3 is attached between the lid member 13 and the cylinder block 3. The valve plate 8 has a supply port (not shown) communicating with a hydraulic supply source (not shown), and a discharge port (not shown) communicating with the tank side. The pistons 6 project from the cylinders 4 by hydraulic pressure led from the hydraulic supply source to the capacity chambers 5 via the supply port, and the pistons 6 push the swash plate 7 via the shoes 9, so that the cylinder block 3 is rotated. Rotation of the cylinder block 3 is transmitted to the driven body via the output shaft 2, so that it is possible to drive the driven body.

In the hydraulic motor 1 having the above configuration, when supply of the pressure oil to the cylinders 4 is stopped, force of pushing the swash plate 7 by the pistons 6 via the shoes 9 is eliminated, and the rotation of the cylinder block 3 is stopped. As a result, drive of the driven body is also stopped.

However, in a case where external force such as gravity force acts on the driven body configured to be driven by the hydraulic motor 1 and force corresponding to the external force is transmitted to the cylinder block 3 via the output shaft 2, it is not possible to maintain the cylinder block 3 in a non-rotated state only by stopping the supply of the pressure oil to the cylinders 4. As a result, there is a possibility that the driven body starts moving.

Therefore, the hydraulic motor 1 includes the friction brake type brake system 100 configured to maintain the cylinder block 3 in a non-rotated state in order to prevent that the driven body starts moving in a state where the pressure oil is not suppled to the cylinders 4. Hereinafter, the brake system 100 will be described.

The brake system 100 includes a brake device 20 configured to cancel brake force by supply of working oil serving as a pressurized working fluid and generate the brake force by discharge of the working oil, supply passages 53, 54 through which the working oil pressurized in a hydraulic pump 51 serving as a working fluid pressurizing source is supplied to the brake device 20, a valve device 40 provided in the supply passages 53, 54 and configured to open and close the supply passages 53, 54, a discharge passage 56 through which the working oil discharged from the brake device 20 flows, and a restrictor 57 provided in the discharge passage 56 and configured to apply resistance to the working oil flowing through the discharge passage 56. The supply passages 53, 54 have the first supply passage 53 on the hydraulic pump 51 side serving as a supply passage on the upstream side, and the second supply passage 54 on the brake device 20 side serving as a supply passage on the downstream side. The valve device 40 is provided between the first supply passage 53 and the second supply passage 54. The working fluid is not limited to the working oil but may be an alternative soluble liquid, etc.

The brake device 20 has plural disc plates 21 configured to be rotated together with the cylinder block 3, plural friction plates 22 non-rotatably provided in the housing case 12, the friction plates being configured to generate friction brake force between the friction plates and the disc plates 21 by being abutted with the disc plates 21, and a brake driving mechanism 25 capable of generating the friction brake force by pressing the disc plates 21 and the friction plates 22 against one another and cancelling the friction brake force by cancelling the pressing.

The disc plates 21 are ring shaped members, and in the present embodiment, as shown in Fig. 1, three disc plates are provided so that the disc plates are separated from each other in the axis O1 direction of the output shaft 2 and sandwich the friction plates 22. On the inner peripheral side of each of the disc plates 21, plural teeth 21a configured to be meshed with splines 3a formed in the outer periphery of the cylinder block 3 are provided.

By meshing the teeth 21a of the disc plates 21 with the splines 3a of the cylinder block 3, the disc plates 21 can be rotated following the rotation of the cylinder block 3 and the disc plates 21 are movable in the axis O1 direction of the output shaft 2 with respect to the cylinder block 3. In such a way, the disc plates 21 are spline-fitted to the outer periphery of the cylinder block 3. The disc plates 21 may be spline-fitted not to the cylinder block 3 but to another member configured to be rotated together with the output shaft 2.

The friction plates 22 are ring shaped members, and in the present embodiment, as shown in Fig. 1, two friction plates are provided so that the friction plates are separated from each other and sandwiched by the disc plates 21 in the axis O1 direction of the output shaft 2. Each of the friction plates 22 has a projecting portion (not shown) extending from an outer edge toward the radially outside. This projecting portion is fitted to a spline (not shown) formed on an inner peripheral surface of the housing case 12. Therefore, the friction plates 22 are not rotatable with respect to the housing case 12, and the friction plates 22 are movable in the axis O1 direction of the output shaft 2 with respect to the housing case 12.

A stepped portion 12c configured to regulate predetermined movement or more of the disc plates 21 and the friction plates 22 in the axis O1 direction of the output shaft 2 is formed in the housing case 12 to which the friction plates 22 are assembled. The plural disc plates 21 and the plural friction plates 22 are arranged in a state where the plates are laminated between the brake driving mechanism 25 and the stepped portion 12c. The number of the disc plates 21 is not limited to three but may be one or may be plural numbers which is other than three. The number of the friction plates 22 is also not limited to two but appropriately provided in accordance with the number of the disc plates 21. In a case where the number of the disc plates 21 is one, the friction plates 22 do not have to be provided.

The brake driving mechanism 25 has an annular brake piston 27 supported by the housing case 12, the brake piston being movable in the axial direction of the output shaft 2, plural brake springs 30 serving as a piston bias member placed between the lid member 13 and the brake piston 27, the brake springs being configured to bias the brake piston 27 toward the disc plates 21, and a brake cancellation chamber 28 configured to move the brake piston 27 against bias force of the brake springs 30 by supply of the pressurized working oil.

The brake piston 27 has a sliding portion 27a configured to slide along a first inner peripheral wall 12a of the housing case 12, and an abutment portion 27b having an outer diameter smaller than that of the sliding portion 27a and projecting from the sliding portion 27a toward the disc plates 21. An outer peripheral surface 27c of the abutment portion 27b slides along a second inner peripheral wall 12b having a diameter smaller than that of the first inner peripheral wall 12a.

In such a way, the brake cancellation chamber 28 is provided between the housing case 12 and the brake piston 27 that slide with respect to each other. Specifically, the brake cancellation chamber 28 is defined by the outer peripheral surface 27c of the abutment portion 27b and the first inner peripheral wall 12a of the housing case 12.

The second supply passage 54 for leading the working oil from the hydraulic pump 51 to the brake cancellation chamber 28 and the discharge passage 56 for leading the working oil discharged from the brake cancellation chamber 28 to a space 15 in the case 11 are formed in the housing case 12 defining the brake cancellation chamber 28. One end of the second supply passage 54 communicates with the brake cancellation chamber 28, and the other end is open on the outside of the housing case 12. One end of the discharge passage 56 communicates with the brake cancellation chamber 28, and the other end is open on the inside of the housing case 12. In such a way, the brake cancellation chamber 28 always communicates with the space 15 in the case 11 communicating with a tank 52 through the discharge passage 56.

The restrictor 57 is provided in the discharge passage 56. Therefore, resistance in accordance with the passage sectional area of the restrictor 57 is applied to the working oil flowing from the brake cancellation chamber 28 to the space 15 in the case 11 through the discharge passage 56.

Plural counter bores 27d formed on a surface opposing the lid member 13 are provided in the sliding portion 27a of the brake piston 27. The counter bores 27d are evenly arranged along the circumferential direction. Each of the brake springs 30 is accommodated in each of the counter bores 27d.

The brake springs 30 are coil springs placed between the lid member 13 and the brake piston 27 in a compressed state. The brake springs bias the brake piston 27 in the direction in which the capacity of the brake cancellation chamber 28 is shrunk and generate the bias force to push the brake piston 27 to the disc plates 21. As the brake springs 30, double springs formed by an inside spring and an outside spring may be used in order to ensure sufficient bias force.

The valve device 40 has a valve housing 42, a spool valve 41 serving as a valve element configured to be slidably housed in a housing hole 42a formed in the valve housing 42, a closing member 44 closing one end of the housing hole 42a, and a spring 43 arranged between the closing member 44 and the spool valve 41 in a compressed state, the spring being configured to apply bias force to the spool valve 41.

In the valve housing 42, the housing hole 42a is formed, and a first connection port 55a connected to the first supply passage 53 on the hydraulic pump 51 side, the first connection port to which the working oil is led from the hydraulic pump 51, and a second connection port 55b connected to the second supply passage 54 on the brake device 20 side, the second connection port from which the working oil is led to the brake device 20 are formed.

The first connection port 55a is formed continuously to the housing hole 42a in the axial direction, and the second connection port 55b is formed so that one end is open on a side surface of the housing hole 42a. The valve device 40 is assembled to the housing case 12 so that the second connection port 55b is connected to the second supply passage 54 formed in the housing case 12.

Since the discharge passage 56 is formed to communicate with the space 15 as described above, the valve device 40 can be assembled to the case 11 only by connecting the second connection port 55b to the second supply passage 54. In such a way, the valve device 40 and the case 11 are connected only with one passage. Thus, it is possible to freely set the direction in which the valve device 40 is assembled to the case 11. As a result, it is possible to improve an assembling property of the valve device 40. The valve device 40 may be assembled inside the housing case 12 or may be assembled inside the lid member 13.

The spool valve 41 is a columnar member slidably supported by the housing hole 42a, and has a pressure receiving surface 41a facing the first connection port 55a, a communication hole 41b formed along the axial direction of the spool valve 41, and an annular groove 41c formed in an annular shape on an outer peripheral surface. The communication hole 41b is a non-through hole in which one end is open on the pressure receiving surface 41a, and the annular groove 41c communicates with the communication hole 41b through plural holes formed in the radial direction.

When the spool valve 41 is moved to a position where the annular groove 41c opposes the second connection port 55b, the first connection port 55a and the second connection port 55b communicate with each other through the communication hole 41b and the annular groove 41c.

The spool valve 41 also has a land portion 41d provided on the opposite side of an opening end of the communication hole 41b with respect to the annular groove 41c. The land portion 41d functions as a sliding surface to slide with respect to the housing hole 42a, and also functions as a shut-off portion to shut off communication between the annular groove 41c and the second connection port 55b. That is, when the spool valve 41 is moved so that the land portion 41d is placed between the annular groove 41c and the second connection port 55b, the communication between the first connection port 55a and the second connection port 55b is shut off.

In the spool valve 41 and the valve housing 42, a limiting portion configured to limit movement of the spool valve 41 may be provided so that the spool valve 41 is moved only between a position where the communication between the first connection port 55a and the second connection port 55b is permitted and a position where the communication between the first connection port 55a and the second connection port 55b is shut off.

The hydraulic pump 51 is a pump configured to be driven by a drive source (not shown) such as an engine. The hydraulic pump sucks the working oil stored in the tank 52, and supplies the pressurized working oil to the brake device 20 through the supply passages 53, 54 and the valve device 40. The hydraulic pump 51 may also serve as a pump configured to supply the working oil to the hydraulic motor 1.

A switching valve 58 is also provided between the hydraulic pump 51 and the valve device 40. The switching valve 58 is a two position electromagnetic switching valve having two positions of a brake activation position 58a where the first supply passage 53 and the tank 52 communicate with each other, and a brake cancellation position 58b where the first supply passage 53 and the hydraulic pump 51 communicate with each other. The switching valve 58 is switched in conjunction with operation of an operation lever (not shown) for operating the hydraulic motor 1.

Specifically, in a case where the operation lever is operated by an operator in the direction in which the hydraulic motor 1 is driven, a position of the switching valve 58 is switched to the brake cancellation position 58b. In a case where the operation lever is operated to a position where the hydraulic motor 1 is stopped, the position of the switching valve 58 is switched to the brake activation position 58a. The switching valve 58 may be mechanically switched in conjunction with the operation of the operation lever.

Next, activation of the brake system 100 will be described. Fig. 1 shows a state where rotation of the hydraulic motor 1 is braked by the brake system 100.

First, a case where braking by the brake system 100 is cancelled will be described.

In a case where the operation lever is operated by the operator in the direction in which the hydraulic motor 1 is driven, there is a need for cancelling the braking of the hydraulic motor 1. Thus, the position of the switching valve 58 is switched to the brake cancellation position 58b.

When the position of the switching valve 58 is switched to the brake cancellation position 58b, the pressurized working oil is led from the hydraulic pump 51 to the first connection port 55a through the first supply passage 53. Pressure of the working oil led to the first connection port 55a acts on the pressure receiving surface 41a of the spool valve 41, and becomes thrust force that moves the spool valve 41 against the bias force of the spring 43.

When the pressure of the working oil led to the first connection port 55a reaches predetermined pressure, the spool valve 41 is moved to the position where the communication between the first connection port 55a and the second connection port 55b is permitted.

When the first connection port 55a and the second connection port 55b communicate with each other through the communication hole 41b and the annular groove 41c, the pressurized working oil is supplied from the hydraulic pump 51 to the brake cancellation chamber 28 through the first supply passage 53, the valve device 40, and the second supply passage 54.

When the pressure of the working oil supplied to the brake cancellation chamber 28 reaches predetermined pressure, the brake piston 27 is moved in the direction in which the brake piston is separated from the disc plates 21 against the bias force of the brake springs 30.

In such a way, when the brake piston 27 is separated from the disc plates 21, and since the disc plates 21 and the friction plates 22 do not push against each other, no friction brake force is generated between the disc plates 21 and the friction plates 22. Therefore, the cylinder block 3 is brought into a rotatable state by the pressure of the working oil led to the cylinders 4.

Although the brake cancellation chamber 28 always communicates with the space 15 in the case 11 through the discharge passage 56, pressure in the brake cancellation chamber 28 is maintained to be predetermined pressure by the restrictor 57 provided in the discharge passage 56. Therefore, the brake piston 27 is held in a state where the brake piston is separated from the disc plates 21.

In such a way, by supplying the pressurized working oil from the hydraulic pump 51 to the brake cancellation chamber 28 through the valve device 40, it is possible to cancel the braking of the hydraulic motor 1.

Next, a case where the braking by the brake system 100 is activated will be described.

In a case where the operation lever is operated by the operator to a position where the hydraulic motor 1 is stopped, there is a need for maintaining the hydraulic motor 1 in a stopped state in order to prevent that the driven body starts moving. Therefore, the position of the switching valve 58 is switched to the brake activation position 58a.

When the position of the switching valve 58 is switched to the brake activation position 58a, the first supply passage 53 communicates with the tank 52. Thus, pressure in the first connection port 55a of the valve device 40 is lowered to pressure of the tank 52. Therefore, the spool valve 41 is moved to the position where the communication between the first connection port 55a and the second connection port 55b is shut off by the bias force of the spring 43.

When the communication between the first connection port 55a and the second connection port 55b is shut off, the working oil is not supplied to the brake cancellation chamber 28 through the second supply passage 54, while the working oil in the brake cancellation chamber 28 is discharged through the discharge passage 56.

Therefore, the pressure of the brake cancellation chamber 28 is gradually lowered, and then the brake piston 27 is pushed to the disc plates 21 by the bias force of the brake springs 30.

By bringing the disc plates 21 and the friction plates 22 into a state where the plates push against each other, the friction brake force is generated between the disc plates 21 and the friction plates 22. By generating the friction brake force in such a way and suppressing rotation of the disc plates 21, the cylinder block 3 is maintained in a state where the rotation is stopped.

In such a way, with the valve device 40, by inhibiting the working oil from going into and out of the brake cancellation chamber 28 through the second supply passage 54 and discharging the working oil from the brake cancellation chamber 28 through the discharge passage 56, it is possible to maintain the hydraulic motor 1 in a stopped state.

Since the restrictor 57 is provided in the discharge passage 56, the pressure of the brake cancellation chamber 28 is relatively slowly lowered. That is, even when the position of the switching valve 58 is switched to the brake activation position 58a, the cylinder block 3 is not instantaneously completely braked but after a predetermined time elapses, the brake force is gradually increased.

By delaying the braking by the brake system 100 in such a way, rotation speed of the driven body configured to be driven by the hydraulic motor 1 is lowered at predetermined deceleration by brake force of the hydraulic motor 1 itself generated by stopping supply of the working oil to the hydraulic motor 1. Therefore, rotation of the driven body configured to be driven by the hydraulic motor 1 is avoided from being suddenly stopped by the brake system 100.

According to the above first embodiment, the following effects are exerted.

In the brake system 100, the valve device 40 provided in the supply passages 53, 54 through which the working oil supplied to the brake device 20 flows is opened by the pressure of the working oil supplied from the hydraulic pump 51 to the first connection port 55a, and permits that the working oil is supplied to the brake device 20 through the first connection port 55a and the second connection port 55b.

That is, since the valve device 40 is directly opened by the working oil supplied to the brake device 20, there is no need for separately leading pilot pressure for opening the valve device 40 to the valve device 40. Therefore, it is possible to simplify the configuration of the valve device 40, and it is possible to make the number of pipes through which the working oil is supplied to the valve device 40 only one. As a result, it is possible to reduce manufacturing cost of the brake system 100.

In the brake system 100, the discharge passage 56 and the restrictor 57 are provided to communicate with the supply passages 53, 54 via the brake cancellation chamber 28. That is, part of the working oil supplied to the brake cancellation chamber 28 through the supply passages 53, 54 is discharged through the discharge passage 56 and the restrictor 57. Therefore, even when the air remains in the brake cancellation chamber 28 at the time of assembling the brake system 100 or when the air is mixed in the working oil supplied from the valve device 40, it is possible to discharge the air in the brake cancellation chamber 28 without performing an air vent task. As a result, it is possible to stabilize activation responsiveness of the brake system 100.

### <Second Embodiment>

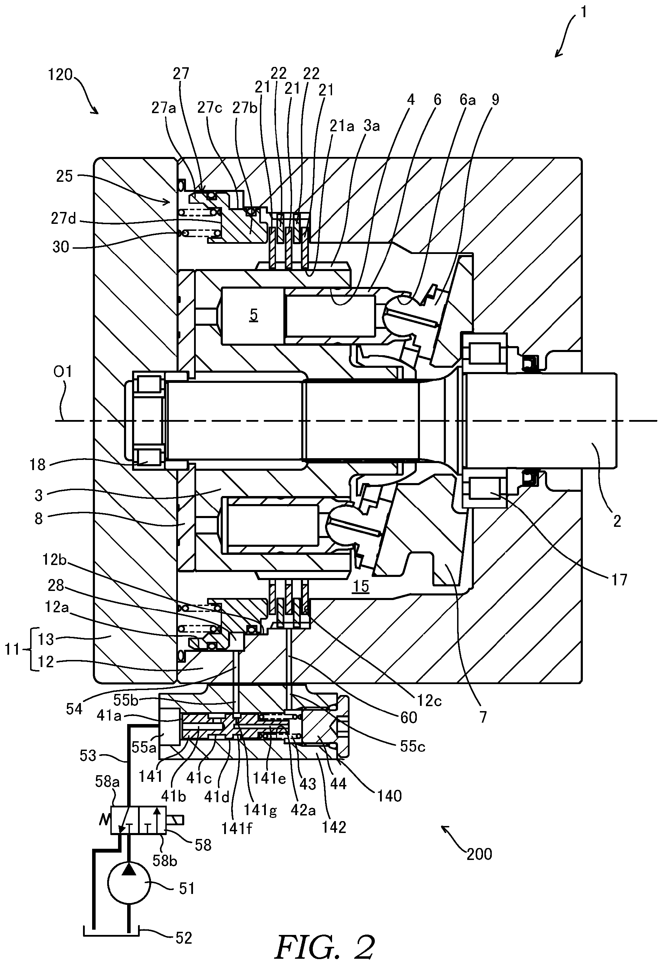

Next, with reference to Fig. 2, a brake system 200 according to a second embodiment of the present invention will be described. Hereinafter, different points from the first embodiment will be mainly described, and the same configurations as the first embodiment will be given the same reference signs and description thereof will be omitted.

The basic configurations of the brake system 200 are the same as those of the brake system 100 according to the first embodiment. The brake system 200 is different from the brake system 100 in a point that working oil in a brake cancellation chamber 28 is discharged through a valve device 140.

The brake system 200 includes a brake device 120 configured to cancel brake force by supply of pressurized working oil and generate the brake force by discharge of the working oil, supply passages 53, 54 through which the working oil pressurized in a hydraulic pump 51 is supplied to the brake device 120, the valve device 140 provided in the supply passages 53, 54 and configured to open and close the supply passages 53, 54, a discharge passage 60 through which the working oil discharged from the brake device 120 flows, and a restrictor 141g configured to apply resistance to the working oil flowing through the discharge passage 60.

The brake device 120 has the same basic configurations as the brake device 20 of the brake system 100 according to the above first embodiment. However, the working oil goes into and out of the brake cancellation chamber 28 of the brake device 120 only through the second supply passage 54. In place of the discharge passage 56, the discharge passage 60 for leading the working oil discharged from the brake cancellation chamber 28 through the valve device 140 to a space 15 in a case 11 is formed in a housing case 12. One end of the discharge passage 60 is open on the outside of the housing case 12 and the other end is open on the inside of the housing case 12.

The valve device 140 has a valve housing 142, a spool valve 141 serving as a valve element configured to be slidably housed in a housing hole 42a formed in the valve housing 142, a closing member 44 closing one end of the housing hole 42a, and a spring 43 arranged between the closing member 44 and the spool valve 141 in a compressed state, the spring being configured to apply bias force to the spool valve 141.

In the valve housing 142, as well as the valve housing 42 of the brake system 100 according to the above first embodiment, the housing hole 42a, a first connection port 55a connected to the first supply passage 53, and a second connection port 55b connected to the second supply passage 54 are formed, and further, a third connection port 55c connected to the discharge passage 60, the third connection port from which the working oil is led to the space 15 in the case 11 is formed.

The third connection port 55c is formed so that one end is open on a side surface of the housing hole 42a. The valve device 140 is assembled to the housing case 12 so that the second connection port 55b is connected to the second supply passage 54 formed in the housing case 12 and the third connection port 55c is connected to the discharge passage 60 formed in the housing case 12.

As well as the spool valve 41 of the brake system 100 according to the above first embodiment, the spool valve 141 has a communication hole 41b, an annular groove 41c communicating with the communication hole 41b, and a land portion 41d, and also has a discharge hole 141e serving as an exhaust passage formed along the axial direction on the opposite side of the communication hole 41b, a discharge groove 141f serving as an exhaust passage formed in an annular shape on an outer peripheral surface on the opposite side of the annular groove 41c with respect to the land portion 41d, and the restrictor 141g providing communication between the discharge hole 141e and the discharge groove 141f. The discharge hole 141e is a non-through hole open on an end surface on the opposite side of an end surface on which the communication hole 41b is open.

When the spool valve 141 having the above configuration is moved so that the land portion 41d is placed between the annular groove 41c and the second connection port 55b, communication between the first connection port 55a and the second connection port 55b is shut off, while the second connection port 55b and the third connection port 55c communicate with each other through the discharge hole 141e, the discharge groove 141f, and the restrictor 141g. By providing the restrictor 141g, resistance in accordance with the passage sectional area of the restrictor 141g is applied to the working oil flowing between the second connection port 55b and the third connection port 55c. A position where the restrictor 141g is provided is not limited to the position where the discharge hole 141e and the discharge groove 141f communicate with each other but may be in an opening end of the discharge hole 141e, in the third connection port 55c, or in the discharge passage 60.

In the spool valve 141 and the valve housing 142, a limiting portion configured to limit movement of the spool valve 141 may be provided so that the spool valve 141 is moved only between a position where the communication between the first connection port 55a and the second connection port 55b is permitted and a position where communication between the second connection port 55b and the third connection port 55c is permitted.

Next, activation of the brake system 200 will be described. Activation in a case where braking by the brake system 200 is cancelled is the same as the brake system 100 according to the above first embodiment. Thus, description thereof will be omitted.

Hereinafter, a case where the braking by the brake system 200 is activated will be described.

In a case where an operation lever is operated by an operator to a position where a hydraulic motor 1 is stopped, there is a need for maintaining the hydraulic motor 1 in a stopped state in order to prevent that a driven body starts moving. Therefore, a position of a switching valve 58 is switched to a brake activation position 58a.

When the position of the switching valve 58 is switched to the brake activation position 58a, the first supply passage 53 communicates with a tank 52. Thus, pressure in the first connection port 55a of the valve device 140 is lowered to pressure of the tank 52. Therefore, the spool valve 141 is moved to a position where the communication between the first connection port 55a and the second connection port 55b is shut off and the communication between the second connection port 55b and the third connection port 55c is permitted by the bias force of the spring 43.

When the communication between the first connection port 55a and the second connection port 55b is shut off, the working oil is not supplied to the brake cancellation chamber 28 through the second supply passage 54, while the working oil in the brake cancellation chamber 28 is discharged through the second supply passage 54, the second connection port 55b, the third connection port 55c, and the discharge passage 60.

Therefore, pressure of the brake cancellation chamber 28 is gradually lowered, and then the brake piston 27 is pushed to disc plates 21 by bias force of brake springs 30.

By bringing the disc plates 21 and friction plates 22 into a state where the plates push against each other, friction brake force is generated between the disc plates 21 and the friction plates 22. By generating the friction brake force in such a way and suppressing rotation of the disc plates 21, a cylinder block 3 is maintained in a state where rotation is stopped.

In such a way, with the valve device 140, by inhibiting supply of the working oil to the brake cancellation chamber 28 through the second supply passage 54 and discharging the working oil from the brake cancellation chamber 28 through the second supply passage 54, it is possible to maintain the hydraulic motor 1 in a stopped state.

Since the restrictor 141g is provided in the spool valve 141 of the valve device 140 through which the working oil discharged from the brake cancellation chamber 28 flows, as well as the above first embodiment, the pressure of the brake cancellation chamber 28 is relatively slowly lowered, and even when the position of the switching valve 58 is switched to the brake activation position 58a, the cylinder block 3 is not instantaneously completely braked but after a predetermined time elapses, brake force is gradually increased.

As well as the brake system 100 according to the above first embodiment, by delaying the braking in the brake system 200 in such a way, rotation speed of the driven body configured to be driven by the hydraulic motor 1 is lowered at predetermined deceleration by brake force of the hydraulic motor 1 itself generated by stopping supply of the working oil to the hydraulic motor 1. Therefore, rotation of the driven body configured to be driven by the hydraulic motor 1 is avoided from being suddenly stopped by the brake system 200.

According to the above second embodiment, the following effects are exerted.

In the brake system 200, as well as the brake system 100 according to the above first embodiment, the valve device 140 provided in the supply passages 53, 54 through which the working oil supplied to the brake device 120 flows is opened by the pressure of the working oil supplied from the hydraulic pump 51 to the first connection port 55a, and permits that the working oil is supplied to the brake device 120 through the first connection port 55a and the second connection port 55b.

That is, since the valve device 140 is directly opened by the working oil supplied to the brake device 120, there is no need for separately leading pilot pressure for opening the valve device 140 to the valve device 140. Therefore, it is possible to simplify the configuration of the valve device 140, and it is possible to make the number of pipes through which the working oil is supplied to the valve device 140 only one. As a result, it is possible to reduce manufacturing cost of the brake system 200.

In the brake system 200, the discharge passage 141e and the restrictor 141g are provided in the valve element 141. Since the discharge passage 141e and the restrictor 141g are provided in the valve element 141 of the valve device 140 in such a way, by replacing the valve element 141 or the valve device 140, it is possible to easily adjust an activation delay time at the time of generating the brake force by the brake system 200.

In the above second embodiment, the working oil discharged from the brake cancellation chamber 28 through the discharge hole 141e formed in the spool valve 141 is led to the space 15 in the case 11 by the third connection port 55c and the discharge passage 60. In place of this, the working oil discharged from the brake cancellation chamber 28 through the discharge hole 141e may be directly led to the tank 52.

### <Third Embodiment>

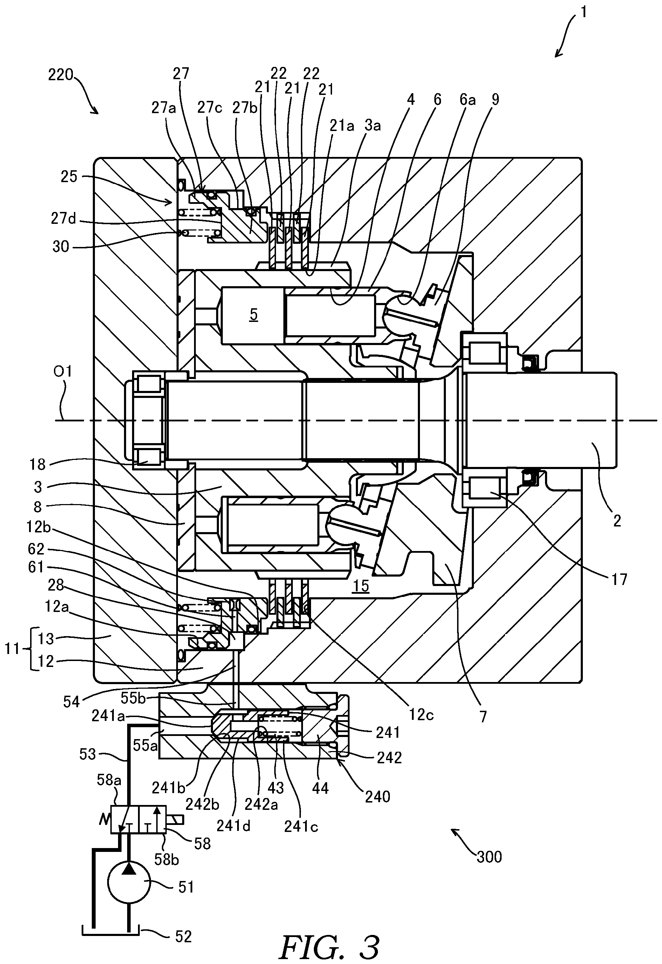

Next, with reference to Fig. 3, a brake system 300 according to a third embodiment of the present invention will be described. Hereinafter, different points from the first embodiment will be mainly described, and the same configurations as the first embodiment will be given the same reference signs and description thereof will be omitted.

The basic configurations of the brake system 300 are the same as those of the brake system 100 according to the first embodiment. The brake system 300 is different from the brake system 100 in a point that a valve element of a valve device 240 is a poppet valve 241 and a point that a discharge passage 61 is formed in a brake piston 27.

The brake system 300 includes a brake device 220 configured to cancel brake force by supply of pressurized working oil and generate the brake force by discharge of the working oil, supply passages 53, 54 through which the working oil pressurized in a hydraulic pump 51 is supplied to the brake device 220, the valve device 240 provided in the supply passages 53, 54 and configured to open and close the supply passages 53, 54, the discharge passage 61 through which the working oil discharged from the brake device 220 flows, and a restrictor 62 provided in the discharge passage 61 and configured to apply resistance to the working oil flowing through the discharge passage 61.

The brake device 220 has the same basic configurations as the brake device 20 of the brake system 100 according to the above first embodiment. However, the discharge passage 61 for leading the working oil discharged from a brake cancellation chamber 28 to a space 15 in a case 11 is provided not in a housing case 12 but in the brake piston 27. One end of the discharge passage 61 communicates with the brake cancellation chamber 28 and the other end is open on a surface facing the space 15 in the case 11. In such a way, the brake cancellation chamber 28 always communicates with the space 15 in the case 11 communicating with a tank 52 through the discharge passage 61.

The restrictor 62 is provided in the discharge passage 61. Therefore, resistance in accordance with the passage sectional area of the restrictor 62 is applied to the working oil flowing from the brake cancellation chamber 28 to the space 15 in the case 11 through the discharge passage 61.

The valve device 240 has a valve housing 242, the poppet valve 241 serving as a valve element configured to be slidably housed in a housing hole 242a formed in the valve housing 242, a closing member 44 closing one end of the housing hole 242a, and a spring 43 arranged between the closing member 44 and the poppet valve 241 in a compressed state, the spring being configured to apply bias force to the poppet valve 241.

In the valve housing 242, the housing hole 242a is formed, and a valve seat portion 242b from and in which the poppet valve 241 is separated and seated, a first connection port 55a connected to the first supply passage 53 on the hydraulic pump 51 side, the first connection port to which the working oil is led from the hydraulic pump 51, and a second connection port 55b connected to the second supply passage 54 on the brake device 220 side, the second connection port from which the working oil is led to the brake device 220 are formed.

The first connection port 55a is formed continuously to the housing hole 242a in the axial direction, the valve seat portion 242b is formed between the housing hole 242a and the first connection port 55a, and the second connection port 55b is formed so that one end is open on a side surface of the housing hole 242a. The valve device 240 is assembled to the housing case 12 so that the second connection port 55b is connected to the second supply passage 54 formed in the housing case 12.

Since the discharge passage 61 is formed to communicate with the space 15 as described above, the valve device 240 can be assembled to the case 11 only by connecting the second connection port 55b to the second supply passage 54. In such a way, the valve device 240 and the case 11 are connected only with one passage. Thus, it is possible to freely set the direction in which the valve device 240 is assembled to the case 11. As a result, it is possible to improve an assembling property of the valve device 240.

The poppet valve 241 has a pressure receiving surface 241a facing the first connection port 55a, a valve portion 241b provided in a periphery of the pressure receiving surface 241a, the valve portion being configured to be separated from and seated in the valve seat portion 242b, a cylindrical sliding portion 241c slidably supported by the housing hole 242a, and a small diameter portion 241d formed on an outer peripheral surface between the valve portion 241b and the sliding portion 241c. The small diameter portion 241d has an outer diameter smaller than that of the sliding portion 241c, and a clearance is formed between the small diameter portion 241d and the housing hole 242a.

In such a way, the small diameter portion 241d is provided between the valve portion 241b and the sliding portion 241c in the poppet valve 241. Thus, when the valve portion 241b of the poppet valve 241 is separated from the valve seat portion 242b, the first connection port 55a and the second connection port 55b communicate with each other through a clearance between the valve portion 241b and the valve seat portion 242b and the clearance between the small diameter portion 241d and the housing hole 242a. When the valve portion 241b is seated in the valve seat portion 242b, communication between the first connection port 55a and the second connection port 55b is shut off.

Next, activation of the brake system 300 will be described. Fig. 3 shows a state where rotation of a hydraulic motor 1 is braked by the brake system 300.

First, a case where braking by the brake system 300 is cancelled will be described.

In a case where an operation lever is operated by an operator in the direction in which the hydraulic motor 1 is driven, there is a need for cancelling the braking of the hydraulic motor 1. Thus, a position of a switching valve 58 is switched to a brake cancellation position 58b.

When the position of the switching valve 58 is switched to the brake cancellation position 58b, the pressurized working oil is led from the hydraulic pump 51 to the first connection port 55a through the first supply passage 53. Pressure of the working oil led to the first connection port 55a acts on the pressure receiving surface 241a of the poppet valve 241, and becomes thrust force that moves the poppet valve 241 against the bias force of the spring 43.

When the pressure of the working oil led to the first connection port 55a reaches predetermined pressure, the poppet valve 241 is moved in the direction in which the valve portion 241b is separated from the valve seat portion 242b, that is, in the direction in which the communication between the first connection port 55a and the second connection port 55b is permitted.

When the first connection port 55a and the second connection port 55b communicate with each other through the clearance between the valve portion 241b and the valve seat portion 242b and the clearance between the small diameter portion 241d and the housing hole 242a, the pressurized working oil is supplied from the hydraulic pump 51 to the brake cancellation chamber 28 through the first supply passage 53, the valve device 240, and the second supply passage 54.

When the pressure of the working oil supplied to the brake cancellation chamber 28 reaches predetermined pressure, the brake piston 27 is moved in the direction in which the brake piston is separated from disc plates 21 against bias force of brake springs 30.

In such a way, when the brake piston 27 is separated from the disc plates 21, and since the disc plates 21 and friction plates 22 do not push against each other, no friction brake force is generated between the disc plates 21 and the friction plates 22. Therefore, a cylinder block 3 is brought into a rotatable state by the pressure of the working oil led to cylinders 4.

Although the brake cancellation chamber 28 always communicates with the space 15 in the case 11 through the discharge passage 61, pressure in the brake cancellation chamber 28 is maintained to be predetermined pressure by the restrictor 62 provided in the discharge passage 61. Therefore, the brake piston 27 is held in a state where the brake piston is separated from the disc plates 21.

In such a way, by supplying the pressurized working oil from the hydraulic pump 51 to the brake cancellation chamber 28 through the valve device 240, it is possible to cancel the braking of the hydraulic motor 1.

Next, a case where the braking by the brake system 300 is activated will be described.

In a case where the operation lever is operated by the operator to a position where the hydraulic motor 1 is stopped, there is a need for maintaining the hydraulic motor 1 in a stopped state in order to prevent that the driven body starts moving. Therefore, the position of the switching valve 58 is switched to a brake activation position 58a.

When the position of the switching valve 58 is switched to the brake activation position 58a, the first supply passage 53 communicates with the tank 52. Thus, pressure in the first connection port 55a of the valve device 240 is lowered to pressure of the tank 52. Therefore, the poppet valve 241 is moved in the direction in which the valve portion 241b is seated in the valve seat portion 242b, that is, to a position where the communication between the first connection port 55a and the second connection port 55b is shut off by the bias force of the spring 43.

When the communication between the first connection port 55a and the second connection port 55b is shut off, the working oil is not supplied to the brake cancellation chamber 28 through the second supply passage 54, while the working oil in the brake cancellation chamber 28 is discharged through the discharge passage 61.

Therefore, the pressure of the brake cancellation chamber 28 is gradually lowered, and then the brake piston 27 is pushed to the disc plates 21 by the bias force of the brake springs 30.

By bringing the disc plates 21 and the friction plates 22 into a state where the plates push against each other, the friction brake force is generated between the disc plates 21 and the friction plates 22. By generating the friction brake force in such a way and suppressing rotation of the disc plates 21, the cylinder block 3 is maintained in a state where the rotation is stopped.

In such a way, with the valve device 240, by inhibiting the working oil from going into and out of the brake cancellation chamber 28 through the second supply passage 54 and discharging the working oil from the brake cancellation chamber 28 through the discharge passage 61, it is possible to maintain the hydraulic motor 1 in a stopped state.

Since the restrictor 62 is provided in the discharge passage 61, as well as the above first embodiment, the pressure of the brake cancellation chamber 28 is relatively slowly lowered. That is, even when the position of the switching valve 58 is switched to the brake activation position 58a, the cylinder block 3 is not instantaneously completely braked but after a predetermined time elapses, the brake force is gradually increased.

As well as the above first embodiment, by delaying the braking in the brake system 300 in such a way, rotation speed of the driven body configured to be driven by the hydraulic motor 1 is lowered at predetermined deceleration by brake force of the hydraulic motor 1 itself generated by stopping supply of the working oil to the hydraulic motor 1. Therefore, rotation of the driven body configured to be driven by the hydraulic motor 1 is avoided from being suddenly stopped by the brake system 300.

According to the above third embodiment, the following effects are exerted.

In the brake system 300, as well as the brake system 100 according to the above first embodiment, the valve device 240 provided in the supply passages 53, 54 through which the working oil supplied to the brake device 220 flows is opened by the pressure of the working oil supplied from the hydraulic pump 51 to the first connection port 55a, and permits that the working oil is supplied to the brake device 220 through the first connection port 55a and the second connection port 55b.

That is, since the valve device 240 is directly opened by the working oil supplied to the brake device 220, there is no need for separately leading pilot pressure for opening the valve device 240 to the valve device 240. Therefore, it is possible to simplify the configuration of the valve device 240, and it is possible to make the number of pipes through which the working oil is supplied to the valve device 240 only one. As a result, it is possible to reduce manufacturing cost of the brake system 300.

In the brake system 300, the discharge passage 61 and the restrictor 62 are provided to communicate with the supply passages 53, 54 via the brake cancellation chamber 28. That is, part of the working oil supplied to the brake cancellation chamber 28 through the supply passages 53, 54 is discharged through the discharge passage 61 and the restrictor 62. Therefore, even when the air remains in the brake cancellation chamber 28 at the time of assembling the brake system 300 or when the air is mixed in the working oil supplied from the valve device 240, it is possible to discharge the air in the brake cancellation chamber 28 without performing an air vent task. As a result, it is possible to stabilize activation responsiveness of the brake system 300.

In the above third embodiment, the discharge passage 61 and the restrictor 62 are provided in the brake piston 27. In place of this, the discharge passage 61 and the restrictor 62 may be provided in the housing case 12 as well as the above first embodiment. The discharge passage 56 and the restrictor 57 of the brake system 100 according to the above first embodiment may be provided in the brake piston 27 as well as the above third embodiment.

### <Fourth Embodiment>

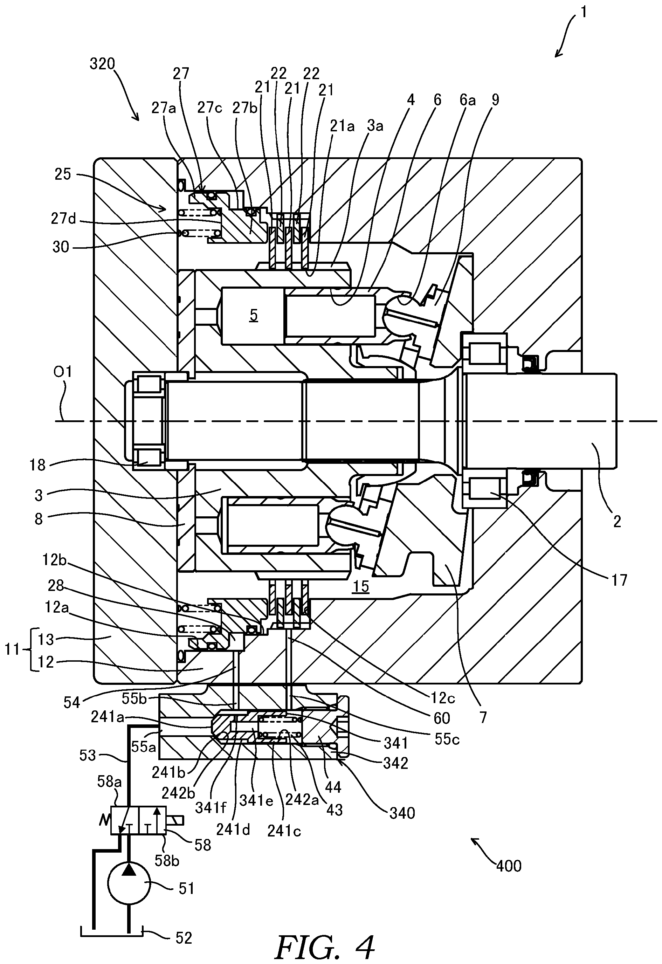

Next, with reference to Fig. 4, a brake system 400 according to a fourth embodiment of the present invention will be described. Hereinafter, different points from the third embodiment will be mainly described, and the same configurations as the third embodiment will be given the same reference signs and description thereof will be omitted.

The basic configurations of the brake system 400 are the same as those of the brake system 300 according to the third embodiment. The brake system 400 is different from the brake system 300 in a point that working oil in a brake cancellation chamber 28 is discharged through a valve device 340.

The brake system 400 includes a brake device 320 configured to cancel brake force by supply of pressurized working oil and generate the brake force by discharge of the working oil, supply passages 53, 54 through which the working oil pressurized in a hydraulic pump 51 is supplied to the brake device 320, the valve device 340 provided in the supply passages 53, 54 and configured to open and close the supply passages 53, 54, a discharge passage 60 through which the working oil discharged from the brake device 320 flows, and a restrictor 341f configured to apply resistance to the working oil flowing through the discharge passage 60.

The brake device 320 has the same basic configurations as the brake device 220 of the brake system 300 according to the above third embodiment. However, the working oil goes into and out of the brake cancellation chamber 28 of the brake device 320 only through the second supply passage 54. The discharge passage 60 for leading the working oil discharged from the brake cancellation chamber 28 through the valve device 340 to a space 15 in a case 11 is formed in a housing case 12. One end of the discharge passage 60 is open on the outside of the housing case 12 and the other end is open on the inside of the housing case 12.

The valve device 340 has a valve housing 342, a poppet valve 341 serving as a valve element configured to be slidably housed in a housing hole 242a formed in the valve housing 342, a closing member 44 closing one end of the housing hole 242a, and a spring 43 arranged between the closing member 44 and the poppet valve 341 in a compressed state, the spring being configured to apply bias force to the poppet valve 341.

In the valve housing 342, as well as the valve housing 242 of the brake system 300 according to the above third embodiment, the housing hole 242a, a valve seat portion 242b from and in which the poppet valve 341 is separated and seated, a first connection port 55a connected to the first supply passage 53, and a second connection port 55b connected to the second supply passage 54 are formed, and further, a third connection port 55c connected to the discharge passage 60, the third connection port from which the working oil is led to the space 15 in the case 11 is formed.

The third connection port 55c is formed so that one end is open on a side surface of the housing hole 242a. The valve device 340 is assembled to the housing case 12 so that the second connection port 55b is connected to the second supply passage 54 formed in the housing case 12 and the third connection port 55c is connected to the discharge passage 60 formed in the housing case 12.

As well as the spool valve 241 of the brake system 300 according to the above third embodiment, the poppet valve 341 has a valve portion 241b, a sliding portion 241c, and a small diameter portion 241d formed between the valve portion 241b and the sliding portion 241c, and also has a discharge hole 341e serving as a discharge passage formed along the axial direction on the opposite side of the valve portion 241b, and the restrictor 341f providing communication between a clearance between the small diameter portion 241d and the housing hole 242a and the discharge hole 341e. The discharge hole 341e is a non-through hole open on an end surface on the opposite side of an end surface on which the valve portion 241b is formed.

When the valve portion 241b of the poppet valve 341 having the above configuration is seated in the valve seat portion 242b, communication between the first connection port 55a and the second connection port 55b is shut off, while the second connection port 55b and the third connection port 55c communicate with each other through the discharge hole 341e and the restrictor 341f. By providing the restrictor 341f, resistance in accordance with the passage sectional area of the restrictor 341f is applied to the working oil flowing between the second connection port 55b and the third connection port 55c. The third connection port 55c is provided at a position where the third connection port is not closed by the sliding portion 241c at the time of seating the valve portion 241b of the poppet valve 341 in the valve seat portion 242b.

Next, activation of the brake system 400 will be described. Activation in a case where braking by the brake system 400 is cancelled is the same as the brake system 300 according to the above third embodiment. Thus, description thereof will be omitted.

Hereinafter, a case where the braking by the brake system 400 is activated will be described.

In a case where an operation lever is operated by an operator to a position where a hydraulic motor 1 is stopped, there is a need for maintaining the hydraulic motor 1 in a stopped state in order to prevent that a driven body starts moving. Therefore, a position of a switching valve 58 is switched to a brake activation position 58a.

When the position of the switching valve 58 is switched to the brake activation position 58a, the first supply passage 53 communicates with a tank 52. Thus, pressure in the first connection port 55a of the valve device 340 is lowered to pressure of the tank 52. Therefore, the poppet valve 341 is moved in the direction in which the valve portion 241b is seated in the valve seat portion 242b, that is, to a position where the communication between the first connection port 55a and the second connection port 55b is shut off by the bias force of the spring 43.

When the communication between the first connection port 55a and the second connection port 55b is shut off, the working oil is not supplied to the brake cancellation chamber 28 through the second supply passage 54, while the working oil in the brake cancellation chamber 28 is discharged through the second supply passage 54, the second connection port 55b, the third connection port 55c, and the discharge passage 60.

Therefore, pressure of the brake cancellation chamber 28 is gradually lowered, and then the brake piston 27 is pushed to disc plates 21 by bias force of brake springs 30.

By bringing the disc plates 21 and friction plates 22 into a state where the plates push against each other, friction brake force is generated between the disc plates 21 and the friction plates 22. By generating the friction brake force in such a way and suppressing rotation of the disc plates 21, a cylinder block 3 is maintained in a state where rotation is stopped.

In such a way, with the valve device 340, by inhibiting supply of the working oil to the brake cancellation chamber 28 through the second supply passage 54 and discharging the working oil from the brake cancellation chamber 28 through the second supply passage 54, it is possible to maintain the hydraulic motor 1 in a stopped state.

Since the restrictor 341f is provided in the poppet valve 341 of the valve device 340 through which the working oil discharged from the brake cancellation chamber 28 flows, as well as the above third embodiment, the pressure of the brake cancellation chamber 28 is relatively slowly lowered, and even when the position of the switching valve 58 is switched to the brake activation position 58a, the cylinder block 3 is not instantaneously completely braked but after a predetermined time elapses, brake force is gradually increased.

As well as the brake system 300 according to the above third embodiment, by delaying the braking in the brake system 400 in such a way, rotation speed of the driven body configured to be driven by the hydraulic motor 1 is lowered at predetermined deceleration by brake force of the hydraulic motor 1 itself generated by stopping supply of the working oil to the hydraulic motor 1. Therefore, rotation of the driven body configured to be driven by the hydraulic motor 1 is avoided from being suddenly stopped by the brake system 400.

According to the above fourth embodiment, the following effects are exerted.

In the brake system 400, as well as the brake system 300 according to the above third embodiment, the valve device 340 provided in the supply passages 53, 54 through which the working oil supplied to the brake device 320 flows is opened by the pressure of the working oil supplied from the hydraulic pump 51 to the first connection port 55a, and permits that the working oil is supplied to the brake device 320 through the first connection port 55a and the second connection port 55b.

That is, since the valve device 340 is directly opened by the working oil supplied to the brake device 320, there is no need for separately leading pilot pressure for opening the valve device 340 to the valve device 340. Therefore, it is possible to simplify the configuration of the valve device 340, and it is possible to make the number of pipes through which the working oil is supplied to the valve device 340 only one. As a result, it is possible to reduce manufacturing cost of the brake system 400.

In the brake system 400, the discharge passage 341e and the restrictor 341f are provided in the valve element 341. Since the discharge passage 341e and the restrictor 341f are provided in the valve element 341 of the valve device 340 in such a way, by replacing the valve element 341 or the valve device 340, it is possible to easily adjust an activation delay time at the time of generating the brake force by the brake system 400.

In the above fourth embodiment, the working oil discharged from the brake cancellation chamber 28 through the discharge hole 341e formed in the poppet valve 341 is led to the space 15 in the case 11 by the third connection port 55c and the discharge passage 60. In place of this, the working oil discharged from the brake cancellation chamber 28 through the discharge hole 341e may be directly led to the tank 52.

Hereinafter, the configurations, the operations, and the effects of the embodiments of the present invention will be summed up and described.

The brake system 100, 200, 300, 400 includes the brake device 20, 120, 220, 320 configured to cancel the brake force by supply of the pressurized working oil and generate the brake force by discharge of the working oil, the supply passages 53, 54 through which the working oil pressurized in the hydraulic pump 51 is supplied to the brake device 20, 120, 220, 320, the valve device 40, 140, 240, 340 provided in the supply passages 53, 54 and configured to open and close the supply passages 53, 54, the discharge passage 56, 60, 61 through which the working oil discharged from the brake device 20, 120, 220, 320 flows, and the restrictor 57, 62, 141g, 341f configured to apply resistance to the working oil flowing through the discharge passage 56, 60, 61. The valve device 40, 140, 240, 340 has the first connection port 55a connected to the upstream side of the supply passages 53, 54, the first connection port to which the working oil is led from the hydraulic pump 51, the second connection port 55b connected to the downstream side of the supply passages 53, 54, the second connection port from which the working oil is led to the brake device 20, 120, 220, 320, and the valve element 41, 141, 241, 341 provided with the pressure receiving surface 41a, 241a facing the first connection port 55a, and the valve element 41, 141, 241, 341 permits the communication between the first connection port 55a and the second connection port 55b when the pressure of the working oil led to the first connection port 55a reaches the predetermined pressure, and shuts off the communication between the first connection port 55a and the second connection port 55b when the pressure of the working oil led to the first connection port 55a becomes less than the predetermined pressure.

With this configuration, the valve device 40, 140, 240, 340 provided in the supply passages 53, 54 through which the working oil supplied to the brake device 20, 120, 220, 320 flows is opened by the pressure of the working oil supplied from the hydraulic pump 51 to the first connection port 55a, and permits that the working oil is supplied to the brake device 20, 120, 220, 320 through the first connection port 55a and the second connection port 55b.

That is, since the valve device 40, 140, 240, 340 is directly opened by the working oil supplied to the brake device 20, 120, 220, 320, there is no need for separately leading pilot pressure for opening the valve device 40, 140, 240, 340 to the valve device 40, 140, 240, 340. Therefore, it is possible to simplify the configuration of the valve device 40, 140, 240, 340, and it is possible to make the number of pipes through which the working oil is supplied to the valve device 40, 140, 240, 340 only one. As a result, it is possible to reduce the manufacturing cost of the brake system 100, 200, 300, 400.

The valve element 41, 141 is the spool valve having the communication hole 41b open on the pressure receiving surface 41a, and the annular groove 41c formed on the outer peripheral surface, the annular groove communicating with the communication hole 41b, and by moving the valve element 41, 141 to the position where the annular groove 41c and the second connection port 55b oppose each other by the pressure of the working oil led to the first connection port 55a, the communication between the first connection port 55a and the second connection port 55b is permitted.

With this configuration, the first connection port 55a and the second connection port 55b communicate with each other through the communication hole 41b open on the pressure receiving surface 41a. In such a way, the valve device 40, 140 supplies the working oil to the brake device 20, 120 through the communication hole 41b open on the pressure receiving surface 41a on which the pressure of the working oil to open the valve element 41, 141 acts. That is, there is no need for separately leading pilot pressure for opening the valve device 40, 140 to the valve device 40, 140. Therefore, it is possible to simplify the configuration of the valve device 40, 140, and it is possible to make the number of pipes through which the working oil is supplied to the valve device 40, 140 only one. As a result, it is possible to reduce the manufacturing cost of the brake system 100, 200.

The valve element 241, 341 is the poppet valve having the valve portion 241b provided in the periphery of the pressure receiving surface 241a, the valve portion being configured to be separated from and seated in the valve seat portion 242b, and by moving the valve element 241, 341 in the direction in which the valve portion 241b is separated from the valve seat portion 242b by the pressure of the working oil led to the first connection port 55a, the communication between the first connection port 55a and the second connection port 55b is permitted.

With this configuration, the first connection port 55a and the second connection port 55b communicate with each other through the clearance between the valve portion 241b provided in the periphery of the pressure receiving surface 241a and the valve seat portion 242b. In such a way, the valve device 240, 340 supplies the working oil to the brake device 220, 320 via the valve portion 241b provided in the periphery of the pressure receiving surface 241a on which the pressure of the working oil to open the valve element 241, 341 acts. That is, there is no need for separately leading pilot pressure for opening the valve device 240, 340 to the valve device 240, 340. Therefore, it is possible to simplify the configuration of the valve device 240, 340, and it is possible to make the number of pipes through which the working oil is supplied to the valve device 240, 340 only one. As a result, it is possible to reduce the manufacturing cost of the brake system 300, 400.

The brake device 20, 220 has the disc plates 21 configured to be rotated together with the cylinder block 3, the brake piston 27 supported by the housing case 12 slidably and movably in the axial direction of the output shaft 2, the brake springs 30 configured to generate the bias force that biases the brake piston 27 toward the disc plates 21, and the brake cancellation chamber 28 defined by the brake piston 27 and the housing case 12, the brake cancellation chamber being configured to move the brake piston 27 against the bias force of the brake springs 30 by supply of the working oil, the discharge passage 56, 61 and the restrictor 57, 62 are provided in the brake piston 27 or the housing case 12 defining the brake cancellation chamber 28, and the supply passages 53, 54 and the discharge passage 56, 61 communicate with each other via the brake cancellation chamber 28.

With this configuration, the discharge passage 56, 61 and the restrictor 57, 62 are provided to communicate with the supply passages 53, 54 via the brake cancellation chamber 28. That is, part of the working oil supplied to the brake cancellation chamber 28 through the supply passages 53, 54 is discharged through the discharge passage 56, 61 and the restrictor 57, 62. Therefore, even when the air remains in the brake cancellation chamber 28 at the time of assembling the brake system 100, 300 or when the air is mixed in the working oil supplied from the valve device 40, 240, it is possible to discharge the air in the brake cancellation chamber 28 without performing an air vent task. As a result, it is possible to stabilize the activation responsiveness of the brake system 100, 300.

The discharge passage 141e, 341e and the restrictor 141g, 341f are provided in the valve element 141, 341, and when the communication between the first connection port 55a and the second connection port 55b is shut off by the valve element 141, 341, the discharge passage 141e, 341e communicates with the second connection port 55b.

With this configuration, the discharge passage 141e, 341e and the restrictor 141g, 341f are provided in the valve element 141, 341. Since the discharge passage 141e, 341e and the restrictor 141g, 341f are provided in the valve element 141, 341 of the valve device 140, 340 in such a way, by replacing the valve element 141, 341, it is possible to easily adjust the activation delay time at the time of generating the brake force by the brake system 200, 400.

The hydraulic motor 1 includes the brake system 100, 200, 300, 400 having the above configuration.

With this configuration, the hydraulic motor 1 includes the brake system 100, 200, 300, 400 having the above configuration. In the brake system 100, 200, 300, 400 having the above configuration, it is possible to make the number of pipes through which the working oil is supplied to the valve device 40, 140, 240, 340 only one. As a result, it is possible to reduce manufacturing cost of the hydraulic motor 1 including the brake system 100, 200, 300, 400.

Embodiments of this invention were described above, but the above embodiments are merely examples of applications of this invention, and the technical scope of this invention is not limited to the specific constitutions of the above embodiments, but to the attached claims.

This application claims priority based on Japanese Patent Application No. 2018-168637 filed with the Japan Patent Office on September 10, 2018.

## Claims

1. A brake system used in a fluid pressure motor including a cylinder block (3) configured to be rotated by fluid pressure, an output shaft (2) configured to be rotated integrally with the cylinder block, and a case (11) configured to rotatably support the output shaft, the brake system comprising:
a brake device configured to cancel brake force by supply of a pressurized working fluid and generate the brake force by discharge of the working fluid;
a supply passage through which the working fluid pressurized in a working fluid pressurizing source is supplied to the brake device;
a valve device (140) configured to open and close the supply passage;
a discharge passage through which the working fluid discharged from the brake device flows; and
a restrictor configured to apply resistance to the working fluid flowing through the discharge passage, wherein
the valve device (140) has a first connection port (55A) connected to the upstream side of the supply passage, the first connection port (55A) to which the working fluid is led from the working fluid pressurizing source, a second connection port (55B) connected to the downstream side of the supply passage, the second connection port from which the working fluid is led to the brake device, and a valve element (41, 141, 241) provided with a pressure receiving surface facing the first connection port, and
the valve element (41, 141, 241) permits communication between the first connection port and the second connection port when pressure of the working fluid led to the first connection port reaches predetermined pressure, and shuts off the communication between the first connection port and the second connection port when the pressure of the working fluid led to the first connection port becomes less than the predetermined pressure.

2. The brake system according to claim 1, wherein
the valve element (41, 141) is a spool valve having a communication hole open on the pressure receiving surface, and an annular groove formed on an outer peripheral surface, the annular groove communicating with the communication hole, and
by moving the valve element (41, 141) to a position where the annular groove and
the second connection port oppose each other by the pressure of the working fluid led to the first connection port, the communication between the first connection port and the second connection port is permitted.

3. The brake system according to claim 1, wherein
the valve element is a poppet valve (241) having a valve portion provided in a periphery of the pressure receiving surface, the valve portion being configured to be separated from and seated in a valve seat, and
by moving the valve element (241) in the direction in which the valve portion is separated from the valve seat by the pressure of the working fluid led to the first connection port, the communication between the first connection port (55A) and the second connection port (55B) is permitted.

4. The brake system according to claim 1, wherein the brake device has:
a disc plate configured to be rotated together with the cylinder block;
a brake piston (27) supported by the case slidably and movably in the axial direction of the output shaft (2);
a piston (6) bias member configured to generate bias force that biases the brake piston toward the disc plate; and
a brake cancellation chamber defined by the brake piston and the case, the brake cancellation chamber (28) being configured to move the brake piston (27) against the bias force of the piston bias member by supply of the working fluid,
the discharge passage and the restrictor are provided in the brake piston or the case, and
the supply passage and the discharge passage communicate with each other via the brake cancellation chamber.

5. The brake system according to claim 1, wherein
the discharge passage and the restrictor are provided in the valve element, and
when the communication between the first connection port (55A) and the second connection port (55B) is shut off by the valve element, the discharge passage communicates with the second connection port.

6. A fluid pressure motor, comprising:
the brake system according to claim 1.

## Patentansprüche

1. Bremssystem, das in einem Fluiddruckmotor verwendet wird, der einen Zylinderblock (3), der so konfiguriert ist, dass er durch Fluiddruck gedreht wird, eine Ausgangswelle (2), die so konfiguriert ist, dass sie zusammen mit dem Zylinderblock gedreht wird, und ein Gehäuse, das so konfiguriert ist, dass es die Ausgangswelle drehbar lagert, hat, wobei das Bremssystem umfasst:
eine Bremsvorrichtung, die so konfiguriert ist, dass sie die Bremskraft durch Zufuhr eines unter Druck stehenden Arbeitsfluids aufhebt und die Bremskraft durch Abgabe des Arbeitsfluids erzeugt;
einen Zufuhrdurchgang, durch den das in einer Arbeitsfluiddruckquelle mit Druck beaufschlagte Arbeitsfluid der Bremsvorrichtung zugeführt wird;
eine Ventilvorrichtung (140), die so konfiguriert ist, dass sie den Zufuhrdurchgang öffnet und schließt;
einen Auslassdurchgang, durch den das von der Bremsvorrichtung abgegebene Arbeitsfluid fließt; und
eine Drosseleinrichtung, die so konfiguriert ist, dass sie der durch den Auslassdurchgang fließenden Arbeitsflüssigkeit einen Widerstand entgegensetzt, wobei
die Ventilvorrichtung (140) einen ersten Anschluss (55A) aufweist, der mit der stromaufwärts liegenden Seite des Zufuhrdurchgangs verbunden ist, wobei das Arbeitsfluid von der Arbeitsfluiddruckquelle zu dem ersten Anschluss (55A) geleitet wird, einen zweiten Anschluss (55B), der mit der stromabwärts liegenden Seite des Zufuhrdurchgangs verbunden ist, wobei das Arbeitsfluid von dem zweiten Anschluss zu der Bremsvorrichtung geleitet wird, und ein Ventilelement (41, 141, 241), das mit einer Druckaufnahmefläche bereitgestellt ist, die zu dem ersten Anschluss gerichtet ist, und
das Ventilelement (41, 141, 241) eine Verbindung zwischen dem ersten Anschluss und dem zweiten Anschluss zulässt, wenn der Druck des zu dem ersten Anschluss geleiteten Arbeitsfluids einen vorbestimmten Druck erreicht, und die Verbindung zwischen dem ersten Anschluss und dem zweiten Anschluss unterbricht, wenn der Druck des zu dem ersten Anschluss geleiteten Arbeitsfluids geringer als der vorbestimmte Druck wird.

2. Bremssystem gemäß Anspruch 1, wobei
das Ventilelement (41, 141) ein Schieberventil ist, das ein an der Druckaufnahmefläche offenes Verbindungsloch und eine an einer Außenumfangsfläche ausgebildete Ringnut aufweist, wobei die Ringnut mit dem Verbindungsloch in Verbindung steht, und
durch Bewegen des Ventilelements (41, 141) zu einer Position, in der die ringförmige Nut und der zweite Anschluss durch den Druck des zum ersten Anschluss geführten Arbeitsfluids einander gegenüberstehen, die Verbindung zwischen dem ersten Anschluss und dem zweiten Anschluss ermöglicht wird.

3. Bremssystem gemäß Anspruch 1, wobei
das Ventilelement (241) ein Tellerventil ist, das einen Ventilabschnitt aufweist, der in einem Umfang der Druckaufnahmefläche bereitgestellt ist, wobei der Ventilabschnitt konfiguriert ist, um von einem Ventilsitz getrennt zu werden und in diesem zu sitzen, und
durch Bewegen des Ventilelements (241) in der Richtung, in der der Abschnitt vom Ventilsitz durch den Druck des zum ersten Anschluss geführten Arbeitsfluids getrennt wird, die Verbindung zwischen dem ersten Anschluss (55A) und dem zweiten Anschluss (55B) ermöglicht wird.

4. Bremssystem gemäß Anspruch 1, wobei
die Bremsvorrichtung aufweist:
eine zusammen mit dem Zylinderblock drehbar ausgebildete Scheibenplatte;
einen Bremskolben (27), der von dem Gehäuse gleitend und beweglich in der axialen Richtung der Ausgangswelle (2) gelagert ist;
ein Vorspannelement eines Kolbens (6), das so konfiguriert ist, dass es eine Vorspannkraft erzeugt, die den Bremskolben in Richtung auf den Scheibenteller vorspannt; und
eine Bremsaufhebungskammer, die durch den Bremskolben und das Gehäuse definiert ist, wobei die Bremsaufhebungskammer (28) so konfiguriert ist, dass sie den Bremskolben (27) durch Zufuhr des Arbeitsfluids gegen die Vorspannkraft des Kolbenvorspannelements bewegt,
der Auslassdurchgang und die Drossel in dem Bremskolben oder dem Gehäuse bereitgestellt sind, und
der Zufuhrdurchgang und der Auslassdurchgang über die Bremsaufhebungskammer miteinander in Verbindung stehen.

5. Bremssystem gemäß Anspruch 1, wobei
der Auslassdurchgang und die Drossel in dem Ventilelement bereitgestellt sind, und
wenn die Verbindung zwischen dem ersten Anschluss (55A) und dem zweiten Anschluss (55B) durch das Ventilelement abgesperrt ist, der Auslassdurchgang mit dem zweiten Anschluss verbunden ist.

6. Fluiddruckmotor, mit:
dem Bremssystem gemäß Anspruch 1.

## Revendications

1. Système de frein utilisé dans un moteur à pression de fluide comprenant un bloc-cylindres (3) configuré pour être entraîné par la pression de fluide, un arbre de sortie (2) configuré pour être entraîné de manière solidaire avec le bloc-cylindres, et un carter (11) configuré pour supporter, en rotation, l'arbre de sortie, le système de frein comprenant :
un dispositif de frein configuré pour annuler la force de frein par l'alimentation d'un fluide de travail sous pression et générer la force de frein par la décharge du fluide de travail ;
un passage d'alimentation à travers lequel le fluide de travail mis sous pression dans une source de mise sous pression de fluide de travail est amené jusqu'au dispositif de frein ;
un dispositif de valve (140) configuré pour ouvrir et fermer le passage d'alimentation ;
un passage de décharge à travers lequel le fluide de travail déchargé du dispositif de frein, s'écoule ; et
un limiteur configuré pour appliquer une résistance sur le fluide de travail s'écoulant par le passage de décharge, dans lequel :
le dispositif de valve (140) a un premier orifice de raccordement (55A) raccordé au côté en amont du passage d'alimentation, le premier orifice de raccordement (55A) auquel le fluide de travail est amené depuis la source de mise sous pression de fluide de travail, un second orifice de raccordement (55B) raccordé au côté en aval du passage d'alimentation, le second orifice de raccordement à partir duquel le fluide de travail est amené au dispositif de frein et un élément de valve (41, 141, 241) prévu avec une surface de réception de pression faisant face au premier orifice de raccordement, et
l'élément de valve (41, 141, 241) permet la communication entre le premier orifice de raccordement et le second orifice de raccordement lorsque la pression du fluide de travail amené au premier orifice de raccordement atteint la pression prédéterminée, et interrompt la communication entre le premier orifice de raccordement et le second orifice de raccordement lorsque la pression du fluide de travail amené au premier orifice de raccordement devient inférieure à la pression prédéterminée.

2. Système de frein selon la revendication 1, dans lequel :
l'élément de valve (41, 141) est un distributeur à tiroir cylindrique ayant un trou de communication ouvert sur la surface de réception de pression, et une rainure annulaire formée sur une surface périphérique externe, la rainure annulaire communiquant avec le trou de communication, et
en déplaçant l'élément de valve (41, 141) dans une position dans laquelle la rainure annulaire et le second orifice de raccordement sont opposés par la pression du fluide de travail amené au premier orifice de raccordement, la communication entre le premier orifice de raccordement et le second orifice de raccordement est autorisée.

3. Système de frein selon la revendication 1, dans lequel :
l'élément de valve est un distributeur à clapet (241) ayant une parte de valve prévue dans une périphérie de la surface de réception de pression, la partie de valve étant configurée pour être séparée de et installée dans un siège de valve, et
en déplaçant l'élément de valve (241), dans la direction dans laquelle la partie de valve est séparée du siège de valve par la pression du fluide de travail amené au premier orifice de raccordement, la communication entre le premier orifice de raccordement (55A) et le second orifice de raccordement (55B) est autorisée.

4. Système de frein selon la revendication 1, dans lequel :
le dispositif de frein a :
une plaque de disque configurée pour être entraînée en rotation conjointement avec le bloc-cylindres ;
un piston de frein (27) supporté par le carter de manière coulissante et mobile dans la direction axiale de l'arbre de sortie (2) ;
un élément de sollicitation de piston (6) configuré pour générer la force de sollicitation qui sollicite le piston de frein vers la plaque de disque ; et
une chambre d'annulation de frein définie par le piston de frein et le carter, la chambre d'annulation de frein (28) étant configurée pour déplacer le piston de frein (27) contre la force de sollicitation de l'élément de sollicitation de piston par l'alimentation du fluide de travail, le passage de décharge et le limiteur sont prévus dans le piston de frein ou le carter, et
le passage d'alimentation et le passage de décharge communiquent entre eux via la chambre d'annulation de frein.

5. Système de frein selon la revendication 1, dans lequel :
le passage de décharge et le limiteur sont prévus dans l'élément de valve, et
lorsque la communication entre le premier orifice de raccordement (55A) et le second orifice de raccordement (55B) est interrompue par l'élément de valve, le passage de décharge communique avec le second orifice de raccordement.

6. Moteur à pression de fluide comprenant :
le système de frein selon la revendication 1.
